# EUROPEAN PATENT APPLICATION

(11) **EP 2 071 443 A2**
(43) Date of publication of application: **17.06.2009**
(21) Application number: 08170892.7
(22) Date of filing: 05.12.2008
(51) Int. Cl.: G06F 3/048

(54) **Method for controlling value of parameter**

(30) Priority: 12.12.2007 EP 07024026
(71) Applicant: ADVANCED DIGITAL BROADCAST S.A., 1292 Chambesy (CH)
(72) Inventor: Paczkowski, Jacek, 40-111 Katowice (PL)
(74) Representative: Pawlowski, Adam

(57) **Abstract**

A method for controlling a value of a parameter of an application executed on a device comprising a touch-sensitive input apparatus with a touch-sensitive area comprises the steps of defining a region map specifying a plurality of parameter control regions within the touch-sensitive area, each parameter control region having assigned a parameter change direction, receiving from the touch-sensitive input apparatus a touch start event specifying a touch starting position within the touch-sensitive area, monitoring the touch-sensitive input apparatus to receive a touch position change or a touch end event, upon detection of a touch position change, setting a parameter change value according to the position change direction, upon detection of a touch end event before detection of a touch position change, setting a parameter change value according to the parameter change direction specified for the parameter control region to which the touch starting position belongs and providing the parameter change value to the application.

## Description

The invention relates to touch-sensitive user interfaces.

Touch-sensitive user interfaces have become popular means for controlling consumer electronic devices. Interfaces having a touch-sensitive area of a closed-loop shape, such as a ring, are particularly suitable for portable devices, such as mobile phones or multimedia players.

Such interfaces provide a convenient way of controlling a parameter of applications executed on the device, such as volume level, brightness or position of a marker on a list, by moving a stylus or a finger over the touch-sensitive area in a continuous manner, for example by making circles over an annular surface. The parameter to be controlled can be selected using additional buttons outside the touch-sensitive area or can be selected automatically depending on the state of operation of the device. For example, in case of a portable music player, when an audio clip is played, the touch-sensitive area can be used to adjust the volume. Similarly, when a list of audio files is displayed, the touch-sensitive area can be used to move a marker through the list.

Such method for controlling a parameter is especially useful for changing the parameter in a quick manner over a wide range. However, some users may find it difficult for precise adjustment of the parameter, for example to change the position on the list only by one item or change the volume by one tick. This requires movement of the stylus or finger over a short range, which may be hard to define for inexperienced users.

Thus, there exists a need to provide a method for controlling a parameter via a touch-sensitive interface, which allows both quick and precise control.

The object of the invention is a method for controlling a value of a parameter of an application executed on a device comprising a touch-sensitive input apparatus with a touch-sensitive area, the method comprising the steps of defining a region map specifying a plurality of parameter control regions within the touch-sensitive area, each parameter control region having assigned a parameter change direction, receiving from the touch-sensitive input apparatus a touch start event specifying a touch starting position within the touch-sensitive area, monitoring the touch-sensitive input apparatus to receive a touch position change or a touch end event, upon detection of a touch position change, setting a parameter change value according to the position change direction, upon detection of a touch end event before detection of a touch position change, setting a parameter change value according to the parameter change direction specified for the parameter control region to which the touch starting position belongs and providing the parameter change value to the application.
Each parameter control region specified in the region map can have further assigned a parameter identifier, and the method may further comprise the step of upon receiving a touch start event, reading from the region map the parameter identifier specified for the parameter control region to which the touch starting position belongs and providing the parameter identifier to the application. The method may further comprise the step of receiving a region map specification from the application and defining the region map according to the received region map specification.
The object of the invention is also a computer program comprising software code adapted to perform the steps of the above described method when executed on a data processing terminal, and a computer readable storage medium comprising the above described computer program.
The object of the invention is also a system for controlling a parameter of an application executed on a device comprising a touch-sensitive input apparatus with a touch-sensitive area, the system comprising a region map specifying a plurality of parameter control regions within the touch-sensitive area, each parameter control region having assigned a parameter change direction, a parameter controller configured to receive from the touch-sensitive input apparatus a touch start event specifying a touch starting position, monitor the touch-sensitive input apparatus to receive a touch position change or a touch end event, upon detection of a touch position change, select a parameter change value according to the position change direction, upon detection of a touch end event before detection of a touch position change, select a parameter change value according to the parameter change direction specified for the parameter control region to which the touch starting position belongs and provide the parameter change value to the application.
Each parameter control region specified in the region map may have further assigned a parameter identifier and the parameter controller may be further configured to upon receiving a touch start event, read from the region map the parameter identifier specified for the parameter control region to which the touch starting position belongs and provide the parameter identifier to the application. The system may further comprise a region map manager, configured to receive a region map specification from the application and define the region map according (105) to the received region map specification.

The invention will now be described by way of example and with reference to the accompanying drawings in which:
Fig. 1 presents a general architecture of a device with a user interface providing a method for controlling a parameter according to the invention.
   Fig. 2 presents one exemplary structure of a region map.
   Fig. 3 presents another exemplary structure of a region map.
   Fig. 4 presents a procedure of operation of the parameter controller.

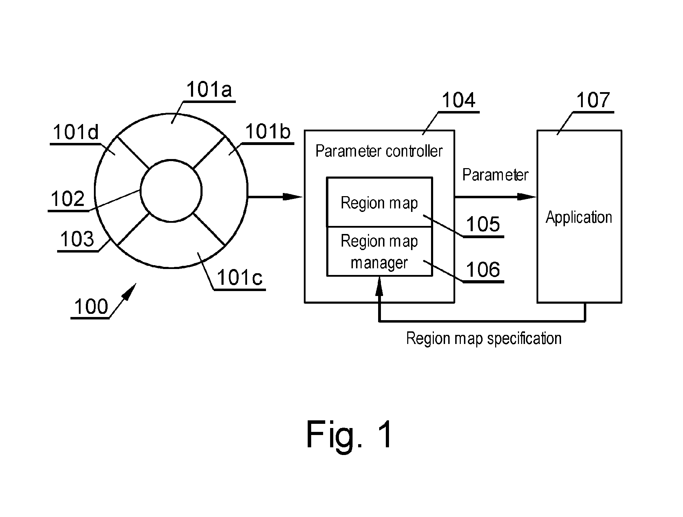

Fig. 1 presents a general architecture of a device with a user interface providing a method for controlling a parameter according to the invention. The device comprises a touch-sensitive input apparatus 100, which has a touch-sensitive area of a closed-loop shape, defined by an inner curve 102 and an outer curve 103, for example a shape of a ring. The input apparatus 100 is operable by touch via a stylus or a finger. Touch events detected at the touch-sensitive area are transmitted to a parameter controller 104. Touch events may be defined as a touch start event specifying that a touch has been detected, a touch end event specifying that the touch has been released, a current touch position on the basis of which touch position change can be calculated.

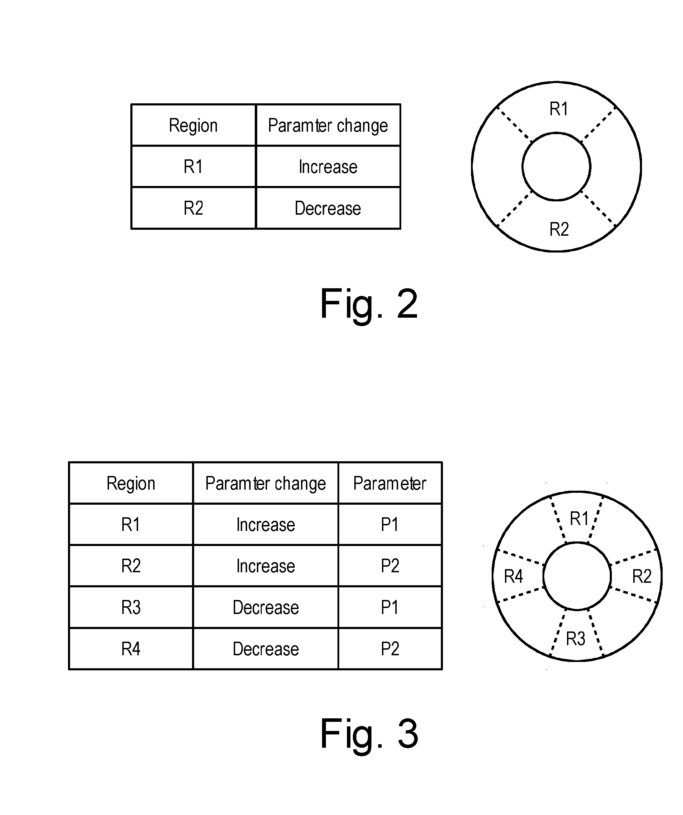

The parameter controller 104 comprises a region map 105, which identifies a plurality of parameter control regions 101a - 101d within the touch-sensitive area of the input apparatus 100. Each parameter control region has assigned at least a parameter change direction. Exemplary structures of the region map are presented on Fig. 2 and Fig. 3. The region map 105 can be predefined, or can be altered by software applications via a region map manager 106. The parameter controller 104 is configured to receive from the input apparatus 100 a touch start event specifying a touch starting position and monitor the input apparatus 100 to further receive current touch position or a touch end event. In case a touch position change is detected, the parameter controller 104 sets a parameter change value, for example +1 or -1, according to the position change direction. In case a touch end event is detected before detection of a touch position change, the parameter change value is set according to the touch starting position. The parameter change value is then transmitted to a software application 107.

The parameter controller 104 may be a hardware element, either stand-alone or integrated with the input apparatus 100, or a software module operable by the processor of the device along with other applications 107. The region map 105 may be pre-defined for all applications or may be application-configurable. In case of application-configurable region map 105 the application, upon execution, defines regions of the touch-sensitive area, their type and optionally parameters and supporting graphics, as explained with reference to Fig. 3.

The application 107 to which the parameter change signal is transmitted can be pre-defined or defined by the operating system or other application depending on the context of operation of the device. For example, in case of the device being a digital music player, in one context of operation the parameter change signal may be directed to a volume control application, while in other context the parameter change signal may be directed to a list display application.

Fig. 2 presents one exemplary structure of a simple region map 105 in a form of a table and indication of the regions on an exemplary touch-sensitive area in a form of a ring. The region map specifies regions and their associated parameter change direction, for example:
- increase - indicating that a touch at the given region causes increase of a given parameter
- decrease - indicating that a touch at the given region causes decrease of a given parameter

A region is defined as a specific area of the touch pad, for example a range of radial coordinates in case of an annular touch-sensitive area, a rectangle defined by opposite in case of rectangular touch-sensitive areas or an array of points.
The regions are used by the controller 104 to determine the parameter change value upon detection of a touch end event before detection of a touch position change.
Region R1, defined at the top part of the annular area is defined so as to receive input for increasing the parameter, while region R2 is defined at the bottom part of the annular area so as to receive input for decreasing the parameter.
The user may also change the parameter by starting the touch at any position and then changing the touch position in a direction that determines the parameter change value, for example a clockwise direction determining increase of the parameter.

Fig. 3 presents another exemplary structure of the region map, which further contains a parameter identifier column, specifying a parameter associated with a given region. Such structure allows specifying a plurality of parameters to be controlled via the touch-sensitive area, for example volume and channel in case of a television receiver.

Regions R1 and R3 are defined for controlling parameter P1, so as to cause its increase or decrease, respectively. Regions R2 and R4 are defined for controlling parameter P2, so as to cause its increase or decrease, respectively.

The parameter identifier is read from the region map upon detection of a touch start event, so as to determine the parameter to be controlled. The parameter identifier is used both for inputs in which touch position changes and inputs for which the touch event is detected before touch position change.

In case a touch start event is detected at a starting position outside the regions defined in the region map, the parameter controller may be configured to take no action or to control the previously controlled parameter in case of a touch position change.

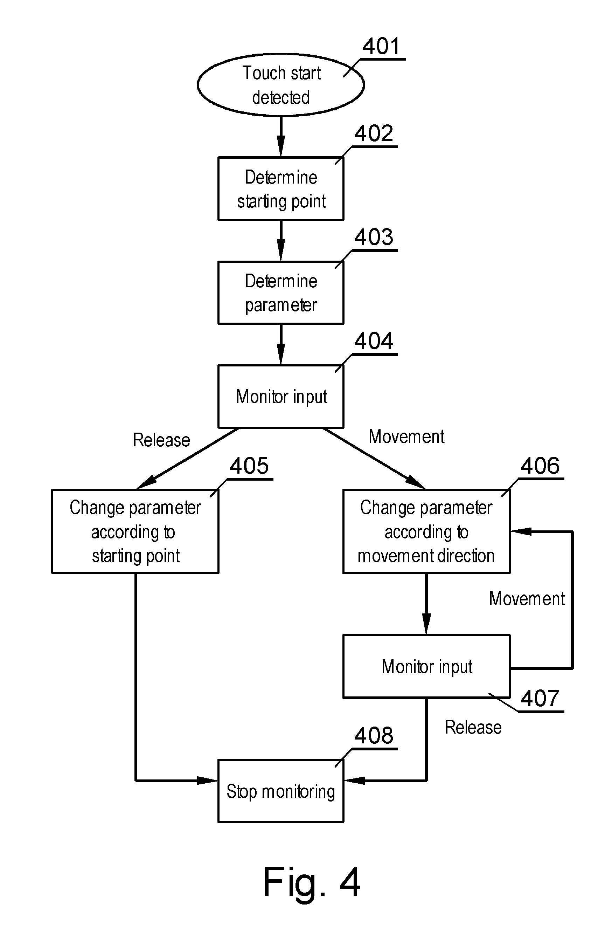

Fig. 4 presents a procedure of operation of the parameter controller. The procedure starts in step 401 when a touch start event is detected at the touch-sensitive apparatus. In step 402 the starting position of the touch input is determined. Next, in case the region map is configured to control a plurality of parameters, a parameter associated with the starting position is read in step 403. The touch input is then monitored for further changes in step 404. In case a touch end event is received before detection of a touch position change, meaning that the user has touched the input apparatus at one position only, a parameter change value is set according to the parameter change direction specified for the parameter control region to which the touch starting position belongs. For example, in case of a region map configured as shown in Fig. 3, if the starting position is in region R1, the parameter change value is set to +1 and provided to the application together with a parameter identifier P1. In case a touch position change has been detected, meaning that the touch input is continued and moved to another position, the movement direction is detected in step 406 and the parameter change value is set according to the position change direction. For example, in case of a region map configured as shown in Fig. 3, if the starting position is in region R1 and a counter-clockwise touch position change has been detected, the parameter change value is set to -1 and provided to the application together with a parameter identifier P1. Monitoring of the touch input is continued in step 407. In case further movement occurs, the parameter is changed in step 406. In case the touch input is released, monitoring is stopped in step 408.

## Claims

1. A method for controlling a value of a parameter of an application executed on a device comprising a touch-sensitive input apparatus with a touch-sensitive area the method comprising the steps of:
- defining a region map specifying a plurality of parameter control regions within the touch-sensitive area, each parameter control region having assigned a parameter change direction
- receiving from the touch-sensitive input apparatus a touch start event specifying a touch starting position within the touch-sensitive area
- monitoring the touch-sensitive input apparatus to receive a touch position change or a touch end event
- upon detection of a touch position change, setting a parameter change value according to the position change direction
- upon detection of a touch end event before detection of a touch position change, setting a parameter change value according to the parameter change direction specified for the parameter control region to which the touch starting position belongs
- providing the parameter change value to the application.

2. The method of claim 1, wherein each parameter control region specified in the region map has further assigned a parameter identifier, the method further comprising the step of
- upon receiving a touch start event, reading from the region map the parameter identifier specified for the parameter control region to which the touch starting position belongs and
- providing the parameter identifier to the application

3. The method of claim 1 or 2, further comprising the step of:
- receiving a region map specification from the application
- defining the region map according to the received region map specification

4. A computer program comprising software code adapted to perform the steps of the method according to any of claims 1 to 3 when executed on a data processing terminal.

5. A computer readable storage medium comprising the computer program of claim 4.

6. A system for controlling a parameter of an application (107) executed on a device comprising a touch-sensitive input apparatus (100) with a touch-sensitive area, the system comprising
- a region map (105) specifying a plurality of parameter control regions (101a-101d) within the touch-sensitive area, each parameter control region (101a-101d) having assigned a parameter change direction
- a parameter controller (104) configured to
- receive from the touch-sensitive input apparatus a touch start event specifying a touch starting position
- monitor the touch-sensitive input apparatus to receive a touch position change or a touch end event
- upon detection of a touch position change, select a parameter change value according to the position change direction
- upon detection of a touch end event before detection of a touch position change, select a parameter change value according to the parameter change direction specified for the parameter control region to which the touch starting position belongs
- provide the parameter change value to the application (107)

7. The system according to claim 6, **characterized in that**
- each parameter control region (101a-101d) specified in the region map has further assigned a parameter identifier
- and the parameter controller (104) is further configured to
- upon receiving a touch start event, read from the region map the parameter identifier specified for the parameter control region to which the touch starting position belongs and
- provide the parameter identifier to the application

8. The system according to claim 6 or 7, **characterized in that** it further comprises
- a region map manager (106), configured to
- receive a region map specification from the application (107)
- define the region map according (105) to the received region map specification
